# EUROPÄISCHE PATENTSCHRIFT

(11) **EP 0 253 222 B1**
(45) Veröffentlichungstag und Bekanntmachung des Hinweises auf die Patenterteilung: **13.01.1993**
(21) Anmeldenummer: 87109540.2
(22) Anmeldetag: 02.07.1987
(51) Int. Cl.: B60N 2/02

(54) **Fahrzeugsitz mit einem durch Höhenverstellung der Sitzvorderkante neigungsverstellbaren Sitzkissen**
Vehicle seat with a seat cushion tilt adjustable by height adjustment of the seat front edge
Siège de véhicule ayant un coussin de siège ajustable en inclination par réglage de l'arête avant de siège en hauteur

(30) Priorität: 18.07.1986 DE 3624398
(43) Veröffentlichungstag der Anmeldung: 20.01.1988
(73) Patentinhaber: C. Rob. Hammerstein GmbH, D-42699 Solingen (DE)
(72) Erfinder: Bauer, Heinz, D-5650 Solingen 11 (DE); Becker, Burckhard, Dipl.-Ing., D-5650 Solingen 11 (DE); Frohnhaus, Ernst-Reiner, Dipl.-Ing., D-5650 Solingen 11 (DE); Gedig, Alfred, Dipl.-Ing., D-5650 Solingen 11 (DE)
(74) Vertreter: Bauer, Wulf, Dr.

(56) Entgegenhaltungen:
- DE-A- 2 753 307
- DE-A- 2 832 519
- DE-A- 2 836 005
- DE-A- 2 841 511
- DE-A- 3 001 429
- DE-A- 3 319 813
- DE-A- 3 608 858
- FR-A- 2 508 298
- US-A- 4 455 047
- PATENT ABSTRACTS OF JAPAN, Band 8, Nr. 182 (M-319)(1619), 22. August 1984

## Beschreibung

Die Erfindung bezieht sich auf einen Fahrzeugsitz nach dem Oberbegriff des Patentanspruchs 1.

Die Erfindung hat das Ziel, einen Fahrzeugsitz so einstellbar zu machen, daß die Beine eines beliebigen Fahrers oder Passagiers in eine ergonomisch günstige, möglichst ermüdungsfreie und für den betreffenden Benutzer bequeme Position gelangen. Dabei sollen die Oberschenkel in die richtige Winkelposition kommen und die Kniekehlen beider Beine an der richtigen Stelle und in der richtigen Höhe unterstützt werden, so daß eine Bewegung der Unterschenkel zwischen den Pedalen und in eine Abstützposition auf dem Fahrzeugboden unterstützt wird. Schließlich soll der Abstand der Sitzvorderkante vom Fahrzeugboden so wählbar sein, daß die individuell gewünschte Neigungsstellung der Unterschenkel möglich ist. Diese Forderungen sollen für alle mit einer gewissen Wahrscheinlichkeit bei Menschen auftretenden Längen und Längenverhältnisse der Unter- und Oberschenkel gelten. Anders ausgedrückt soll die Kissenverstellung für alle innerhalb eines Normbereichs liegenden Größen und Größenverhältnisse der Beine möglich sein.

Bei dem aus der FR-A-2 508 298 vorbekannten Fahrzeugsitz der eingangs genannten Art ist das Sitzpolster mit der Vorderkante des Tragteils verbunden. Die U-förmige Schwenkbrücke ist oben auf das Tragteil aufgesetzt, die Basis der Schwenkbrücke befindet sich mittig hinter der Vorderkante des Tragteils und hat eine Länge, die etwa der Hälfte der Länge der Vorderkante des Tragteils entspricht. Bei Verstellen der U-förmigen Schwenkbrücke wird ein Teilstück der Vorderkante des Sitzkissens im Bereich der Elastizität des Sitzpolsters mehr oder weniger nach oben gedrückt. Randbereiche der Sitzvorderkante lassen sich auf diese Weise jedoch nicht höhenverstellen.

Bei dem aus der DE-A-2 836 005 vorbekannten Fahrzeugsitz der eingangs genannten Art ist ein komplettes, aus einem rahmenförmigen Sitzträger, einer Kissenfederung und einem Sitzpolster zusammgesetztes Sitzkissen in seinem hintersten Bereich, und zwar unterhalb der Rückenlehne, mit einem Untergestell verbunden, im Vorderbereich, schräg unterhalb der Sitzvorderkante ist eine Neigungsverstellvorrichtung angeordnet. Das Untergestell wird von einer Gleitschienenführung gebildet, die über eine Parallelogramm-Höhenverstellung mit einem Fahrzeugboden verbunden ist.

Darüberhinaus ist ein neigungsverstellbarer Fahrzeugsitz mit höhenverstellbarer Sitzvorderkante aus der DE-A-2 841 511 vorbekannten, bei diesem ist im Bereich der Sitzvorderkante ein Zahnsegment und ein damit kämmendes Ritzel angeordnet, das über eine betätigbare Sperreinrichtung stufenweise höhenverstellbar ist.

Daneben sind noch verschiedene Lösungen mit quergeteiltem Sitzkissen vorbekannt, so ist beispielsweise aus der DE-A-3 001 429 ein Fahrzeugsitz bekannt, dessen Sitzkissen aus einem rückwärtigen und einem vorderen Kissen besteht, von denen das vordere Kissen entlang der Oberschenkelneigung des Fahrzeuginsassen über eine Einstellvorrichtung verschiebbar ist.

Schließlich ist aus der DE-A-2 753 307 der Anmelderin eine Verstelleinrichtung bekannt, bei der der Fahrzeugsitz vier nach unten weisende Zapfen hat, die ähnlich kurzausgeführten Stuhlbeinen sind. In ihnen sind in unterschiedlichen Höhen Quernuten vorgesehen. Die Zapfen greifen in im Untergestell vorgesehene Löcher und können durch in die Quernuten eingreifende Schieber mit dem Untergestell verriegelt werden.

Der aus der DE-A-2 836 005 vorbekannte Fahrzeugsitz hat eine relativ große Anzahl von Einzelbauteilen, so daß er nicht nur schwer, sondern auch in der Herstellung und Montage sowie im Preis aufwendig ist. Dieselben Argumente treffen auch für den aus der DE-A-2 841 511 vorbekannten Fahrzeugsitz zu. Bei einem Fahrzeugsitz mit zweigeteiltem Sitzkissen ist dagegen ein nicht oder nur unzureichend gepolsterter Bereich zwischen den beiden Einzelsitzkissen nicht zu vermeiden. Eine kontinuierlich durchgehende und gleichförmige Abstützung der Oberschenkel wird daher nicht immer erreicht, insbesondere nicht bei Passagieren mit relativ langen Oberschenkeln.

Ausgehend von dem Fahrzeugsitz nach der FR-A-2 508 298 liegt der Erfindung die Aufgabe zugrunde, einen Fahrzeugsitz anzugeben, bei der nicht nur das Sitzkissen seine Form verändert, sondern der Sitzträger selbst seine geometrische Form ändert und auch ein Verstellen der Randbereiche der Sitzvorderkante möglich ist.

Diese Aufgabe wird gelöst durch den Fahrzeugsitz nach dem Patentanspruch 1.

Bei diesem Fahrzeugsitz ist der Sitzträger zweiteilig und in sich verstellbar. Dadurch wird nicht nur ein Teilbereich der Sitzvorderkante angehoben oder abgesenkt, sondern die Basis der Schwenkbrücke selbst bildet die Vorderkante des Sitzträgers, wodurch ein größerer Verstellhub erreicht und die Sitzvorderkante auf ihrer gesamten Länge gleichmäßig höheneingestellt werden kann.

Die Kissenfederung ist zwischen dem hinteren Rahmenteil und der Basis der Schwenkbrücke gespannt. Der Benutzer empfindet einen derartigen Fahrzeugsitz stets als eine Einheit, obwohl das vordere Teil und das hintere Teil des Sitzträgers gegeneinander verstellbar sind. Eine Posterlücke kann nicht auftreten. Die zwangsläufige Längenänderung der Kissenfederung bei einem Verstellen der Schwenkbrücke kann so klein gehalten werden, daß sie am äußerlich sichtbaren Sitzpolster überhaupt nicht bemerkbar ist, insbesondere, wenn für dieses ein elastisches Material verwendet wird. Die Längenänderung kann zudem dadurch kleingehalten werden, daß die Schwenkachse möglichst weit im hinteren Bereich des Sitzträgers angeordnet ist.

Ein besonderer Vorteil der von der Basis der Schwenkbrücke zum hinteren Rahmenteil gespannten und einen Zug zwischen diesen beiden Teilen ausübenden Kissenfederung liegt aber darin, daß sie in vorzugsweiser Ausbildung der Erfindung oberhalb der Schwenkachse verläuft. Dies soll auch bei einer Belastung der Kissenfederung durch das Gewicht eines Normalpassagiers erhalten bleiben. Die Kissenfederung zieht sich dadurch beständig die Schwenkbrücke nach oben. Andererseits wird die Schwenkbrücke aber durch das Gewicht eines Passagiers nach unten gedrückt. Durch geeignete Abstimmung der hochstellenden Federkraft der Kissenfederung und der von einem Passagier eingeleiteten Belastungskraft ist es möglich, den Verstellvorgang der Sitzvorderkante bequem und ohne großen Kraftaufwand durchführen zu können.

Die Schwenkachse der Schwenkbrücke ist vorzugsweise im hinteren Teilbereich des Sitzkissens vorgesehen, sie befindet sich vorzugsweise zwischen der Quermitte und der Hinterkante des Sitzkissens. Insgesamt ist man in der geometrischen Anordnung der Schwenkachse weitgehend frei, so daß die Anordnung so getroffen werden kann, wie es für den Gebrauch des Fahrzeugsitzes am günstigsten ist. Auch hierin ist ein entscheidender Vorteil gegenüber dem nächstliegenden Stand der Technik zu ersehen. Je näher die Schwenkachse an der Sitzvorderkante ist, um so kleiner wird zwar die Anhebung der Sitzvorderkante bei vorgegebenem Schwenkwinkel der Schwenkbrücke um die Schwenkachse, um so stärker geht aber auch die Sitzvorderkante zurück, nähert sich also der Sitzhinterkante. Dieser Zusammenhang ist aber durchaus erwünscht. Passagiere mit langen Beinen, insbesondere langen Unterschenkeln, werden die Sitzvorderkante bei der Sitzverstellung relativ hoch einstellen, damit ihre Beine, insbesondere Kniekehlen, richtig abgestützt sind. Bei längeren Unterschenkeln ist aber ein schräger Verlauf der Unterschenkel günstig.

In bevorzugter Weiterbildung sind die beiden Schenkel der Schwenkbrücke im Bereich ihrer Längenmitte abgewinkelt, wobei die entstehende Winkelspitze sich oberhalb der geradlinigen Verbindungsstrecke der beiden Schenkelenden befindet. Hierdurch wird mehr Platz für eine Verstelleinrichtung, die zwischen dem in Nähe der Basis befindlichen Endbereich der Schenkel und dem Tragteil auf beiden Seiten angeordnet ist, geschaffen. Die Verstelleinrichtung kann in bekannter Weise mit einem Zahnsegment, das an jedem Schenkel der Schwenkbrücke angeordnet ist, und einem damit kämmenden Ritzel erreicht werden, welches im Tragteil drehbar gelagert und vorzugsweise über einen Drehgriff, oder auch durch einen Motor, gedreht werden kann. In einer anderen Ausführung wird ein Triebstock eingesetzt, wie er beispielsweise aus der DE-A-33 19 813 der Anmelderin bekannt ist. Er kann zwei oder mehrere Zapfen aufweisen. Schließlich ist eine Verstelleinrichtung mit Schlingfeder möglich, wie sie beispielsweise aus der DE-A-3 608 858 bekannt ist.

Um jegliche Verletzungsgefahr zwischen den sich relativ zueinander bewegenden Teilen des Sitzträgers auszuschalten und der Gesamtanordnung ein gutes Aussehen zu geben, wird vorgeschlagen, bis auf eine bei Handverstellung notwendige Handhabe, die mechanisch bewegbaren Teile des Sitzträgers durch das Sitzpolster abzudecken, insbesondere im vorderen Bereich mit einem nach unten weisenden Vorsprung auszustatten, der im Bereich der Vorderkante innenseitig vorzugsweise eine Krümmung aufweist, deren Mittelpunkt in der Schwenkachse liegt. Er kann so lang gewählt werden, daß auch in der höchsten Einstellposition der Schwenkbrücke eine optische Abdeckung erzielt wird. Dies ist insbesondere vorteilhaft, wenn das Tragteil als Rahmen ausgebildet ist. Durch ein derartiges Tragteil wird aber wiederum die Stabilität des gesamten Sitzträgers deutlich verbessert.

Die Verstellvorrichtung arbeitet vorzugsweise selbsthemmend. Es genügt, nur einen Schenkel der Schwenkbrücke zu arretieren, vorteilhaft ist aber, die Einstellbewegung zugleich auf den anderen Schenkel zu übertragen und dort ebenfalls die Position zu verriegeln. Die Verstellbewegung kann auch an der Basis angreifen, jedoch hat die Anordnung im basisnahen Bereich der Schenkel den Vorteil, daß die Verstellvorrichtung besser integriert werden kann. Ein elektromotorischer Antrieb über Zahnsegment und Ritzel, über eine Spindel oder über einen Exzenter ist möglich.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das im folgenden unter Bezugnahme auf die Zeichnung näher erläutert wird. In dieser zeigen:
- Fig. 1: eine teilweise als Montagebild ausgeführte perspektivische Darstellung eines Sitzträgers mit Kissenfederung und Verstelleinrichtung mit Schlingfeder und
- Fig. 2: eine Seitenansicht entsprechend der Linie II-II in Fig. 1, mit zusätzlich eingezeichnetem, hinter der Schwenkbrücke geschnittenem Sitzpolster, mit Rückenlehne und einem strichpunktiert angedeutetem Passagier.

Der aus den Figuren ersichtliche Fahrzeugsitz hat ein durch Höhenverstellung der Sitzvorderkante 20 neigungsverstellbares Sitzkissen 22. Das Sitzkissen 22 selbst besteht in bekannter Weise aus einem Sitzpolster 24, einer elastischen Kissenfederung 26 und einem Sitzträger 28, der seinerseits aus einem rahmenartig ausgebildeten Tragteil 30 aus flachem, hochstehendem Blechmaterial und einer U-förmigen Schwenkbrücke 32 aufgebaut ist, die aus Rohrmaterial gefertigt ist und eine unterhalb der Sitzvorderkante 20 und über praktisch die gesamte Länge dieser Sitzvorderkante 20 verlaufende Basis 34 und zwei abgeknickte Schenkel 36, 38 hat. Diese sind an ihren freien Endbereichen innenseitig in zwei auf einer gemeinsamen Schwenkachse 40 liegenden Anlenkpunkten mit Seitenteilen 42 des rahmenförmigen Tragteils 30 verbunden.

Der Sitzträger 28 ist steif ausgeführt und vorzugsweise entsprechend der Lehre der DE-A-2 832 519 mit Sitzschienen einer Längsführung integriert (nicht dargestellt). Seine Vorderwand 44 hat nur eine geringe Höhe, die kleiner ist als die Höhe seiner Hinterwand 46. Hierdurch wird im vorderen Bereich Platz geschaffen. Die Seitenteile 42 haben eine dachartig verlaufende Unterkante, im Bereich der größten Breite befindet sich die Schwenkachse 40. Diese ist relativ tief angesetzt, um auch hier wiederum viel Platz zu gewinnen. Insgesamt wird dadurch der einstellbare Sitzträger 28 aus den Teilen 30, 32 nicht wesentlich größer als ein normaler, einstückiger Sitzträger. Dies bedeutet aber gegenüber den vorbekannten Höhenverstellvorrichtungen der Sitzvorderkante insgesamt eine deutliche Einsparung an Platz und Raum.

Die Schenkel 36, 38 sind identisch ausgebildet, sie haben etwa im Bereich ihrer Längsmitte eine gerundet ausgebildete Abwicklung 48 von ca. 140°, die so ausgebildet ist, daß in der in den Figuren gezeigten Winkellage der Schwenkbrücke 32 ein erster, von der Basis 34 rechtwinklig beginnender Teilbereich parallel zum Seitenteil 42, nämlich die Oberkante dieses Seitenteils 42, verläuft. Die Abwinklung 48 gibt dem Sitzkissen 22 zugleich eine seitliche Abstützung ähnlich einem Schalensitz. Sie kann hierzu noch höher als dargestellt gezogen werden.

Etwa mittig zwischen der Abwinklung 48 und dem Übergang des Schenkels 36 bzw. 38 in die Basis 34 springt nach unten ein Verzahnungsteil 50 vor, das ein Fenster aufweist, an dessen der Basis 34 zugewandter, länglicher Grenzlinie ein Zahnbogen 52 ausgebildet ist, der zentrisch zur Schwenkachse 40 verläuft. Mit ihm steht ein Ritzel 54 in Eingriff, das im Seitenteil 42 drehbar gelagert ist. Hierzu hat das Seitenteil 42 einen etwa halbrunden, zum Schenkel 36 bzw. 38 hin vorspringenden, einstückigen Ansatz 56, die Achse des Ritzels 54 befindet sich etwa auf der Höhe der Oberkante der Seitenteile 42.

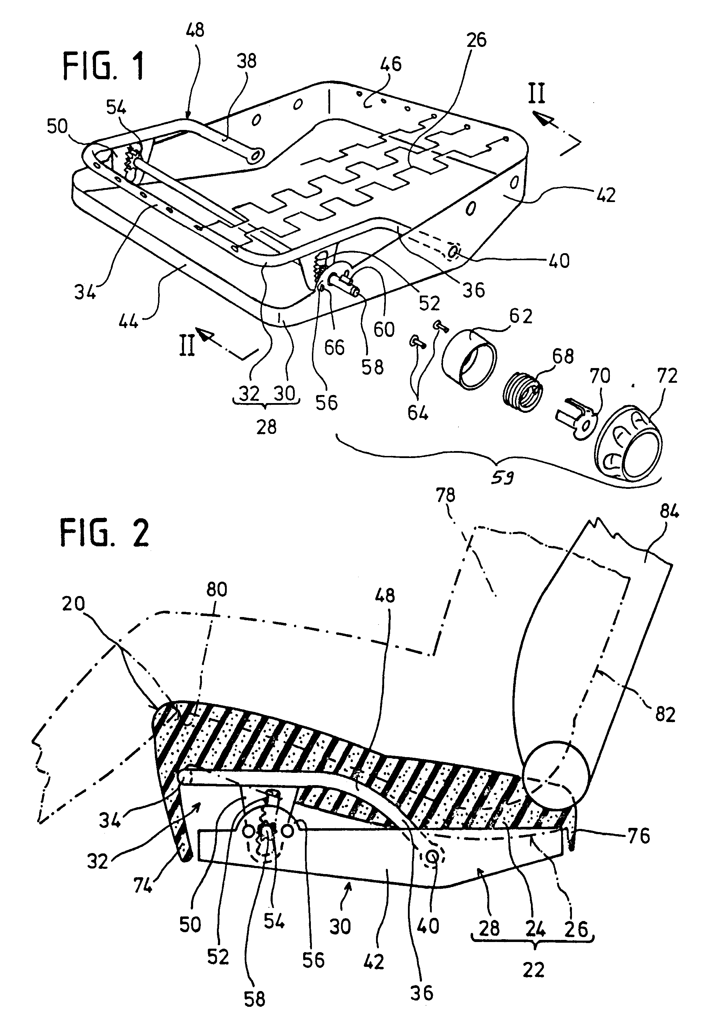

Wie die Fig. 1 zeigt, ist beiden Schenkeln eine Stellvorrichtung aus Zahnbogen 52 und Ritzel 54 zugeordnet, die beiden Ritzel 54 sind durch eine Welle 58 miteinander verbunden, die an einer Seite, in Fig. 1 der vornliegenden Seite, vorsteht. Dort ist auf ein seitlich überstehendes Teilstück der Welle 58 ein axial verlaufender Mitnehmer 60 aufgesetzt. Konzentrisch zur Welle 58 springt ein Topf 62 nach außen vor, der über zwei Niete 64, die durch Löcher 66 im Seitenteil 42 gesteckt sind, fest mit dem Seitenteil 42 verbunden wird. In ihm befindet sich in bekannter Weise eine Schlingfeder 68 in Form einer Schraubenfeder mit nach innen radial verlaufenden Endbereichen. Sie liegt normalerweise elastisch am Innenmantel des Topfes 62 an, ihre radial nach innen weisenden Endbereiche liegen in Drehrichtung vor bzw. hinter dem Mitnehmer 60. In die Schlingfeder 68 greift ein Entsperrteil 70 mit zwei axialen Fingern, es ist drehfest mit einem Handknopf 72 verbunden. Je nach Drehbewegung des Handknopfes nimmt ein Finger einen Endbereich der Schlingfeder 68 mit, dabei verringert sich der Außendurchmesser der Schlingfeder 68, so daß die Bremswirkung innerhalb des Topfes 62 aufgehoben ist und bei fortgesetzter Drehbewegung über die Schlingfeder 68 ein Drehmoment auf die Welle 58 übertragen wird. Nähere Einzelheiten dieser Konstruktion und Weiterbildungen sind aus der DE-A-3 608 585 zu ersehen.

Wie die Fig. 1 zeigt, verläuft die Kissenfederung 26 ausschließlich zwischen der Basis 34 der Schwenkbrücke 32 und der Hinterwand 46. Im gezeigten Ausführungsbeispiel ist die Kissenfederung 26 durch flache, gewellte Stahlfedern gebildet, eine andere Ausbildung, beispielsweise mittels Schraubenfedern, Gummisträngen, Gummiseilen, einer elastischen Matte oder dergleichen ist möglich. Entscheidend ist lediglich, daß die Kissenfederung 26 nicht mit den Seitenteilen des Sitzträgers 28, also den Schenkeln 36, 38 und dem Seitenteil 42 verbunden ist, obwohl eine insbesondere elastische Verbindung in Nähe der Endbereiche der Kissenfederung 26, also beispielsweise an den Schenkeln 36, 38 zwischen dem Verzahnungsteil 50 und der Basis 34, durchaus möglich ist und die Funktion nicht stört.

Die Kissenfederung 26 zieht mit der Summe der Kraft ihrer einzelnen Federn die Basis 34 gegen die Hinterwand 46. Da sich die Schwenkachse 40 der Schwenkbrücke 32 unterhalb der Kissenfederung 26 befindet, wird ein aufrichtendes Drehmoment auf die Schwenkbrücke 32 ausgeübt. Die Konstruktion ist dabei so gewählt, daß die Kissenfederung 26 auch bei Belastung durch das Gewicht eines Normalpassagiers oberhalb der Schwenkachse 40 bleibt, so daß die aufrichtende Kraft auch bei Belastung noch vorliegt. Das aufrichtende, durch die Kissenfederung 26 bewirkte Drehmoment ergibt sich aus dem Abstand der Kissenfederung 26 von der Schwenkachse 40 multipliziert mit der Gesamtkraft der Kissenfederung 26. Diesem Drehmoment entgegengerichtet ist das durch einen Passagier eingeleitete Belastungsmoment, das die Sitzvorderkante 20 nach unten drückt. Entscheidend ist hierbei aber nur derjenige Anteil des Passagiergewichts, der auf die Schwenkbrücke 32 einwirkt. Die nach unten gerichtete Belastungskraft durch das anteilige Passagiergewicht multipliziert mit ihrem horizontalen Abstand von der Schwenkachse 40 ergibt das gegenwirkende Belastungsmoment. In der Praxis werden beide, gegengerichtete Momente so bemessen und abgestimmt, daß eine bequeme Verstellung des belasteten Fahrzeugsitzes möglich ist.

Wie Fig. 2 zeigt, ist das Sitzkissen 22 schalenförmig ausgebildet, es hat ringsrumlaufende , nach unten weisende, schmale Vorsprünge 74, 76 des Sitzpolsters 24 oder eines Bezuges. Diese Abschlußkanten sind so tief gezogen, daß sie bei höchster Schwenkeinstellung der Schwenkbrücke 32 fast mit der Unterkante des Tragteils 30 abschließen. Sie verdecken dadurch den Sitzträger 28 und seine Verstellvorrichtung, sie verhindern aber auch aufgrund eines nur sehr geringen Luftspaltes zwischen dem Vorsprung 74 und der Vorderwand 44 Verletzungen während des Verstellens der Schwenkbrücke 32. Die Höhe des unterhalb der Sitzvorderkante 20 befindlichen Vorsprungs 74 ist größer als der maximale Verstellhub der Basis 34 der Schwenkbrücke 32. Im Bereich der Hinterwand 46 ist ein Vorsprung 76 vorgesehen, dieser ist aber für den Bewegungsablauf nicht notwendig, da hier keine Bewegung erfolgt, er verdeckt lediglich die Hinterwand 46. Die nicht dargestellten Vorsprünge des Sitzpolsters 34 im Bereich der Seitenteile 42 haben vorne die Höhe des Vorsprungs 74 und werden nach hinten zu gleichmäßig schmaler, bis sie die Höhe des Vorsprungs 76 erreichen.

Im gezeigten Ausführungsbeispiel befindet sich die Schwenkachse etwas hinter der Längenmitte der Seitenteile 42. Die örtliche Lage der Schwenkachse 40 hat im wesentlichen nur Einfluß auf die Kinematik, nicht aber auf den vom Benutzer empfundenen Schwenkpunkt des Sitzkissens 22. Da das Gewicht eines Benutzers auf der Kissenfederung 26 lastet und diese ohne Zwischenabstützung an der Hinterwand 46 befestigt ist, ergibt sich für einen Benutzer der Eindruck, daß die gesamte Sitzfläche um die hintere, waagerechte Befestigungslinie der Kissenfederung 26 kippt.

Das Sitzkissen 22 hat seine größte Länge und die Kissenfederung 26 hat ihre größte Dehnung, wenn sich die Basis 34 in ihrer untersten Schwenkposition befindet. Am kürzesten ist das Sitzkissen 22 bei in höchster Schwenkposition befindlicher Schwenkbrücke 32. Diese Längenänderung des Sitzkissens 22 ist jedoch insgesamt geringfügig und wird vom gesamten Sitzpolster 24 aufgenommen, das bei geeigneter elastischer Ausbildung die Längenänderungen verkraftet, ohne daß Unregelmäßigkeiten auftreten.

Strichpunktiert ist in Fig. 2 schließlich ein Teil eines menschlichen Körpers 78 eingezeichnet, der das Sitzkissen 22 belastet. Wie aus dieser Figur ersichtlich ist, befindet sich die Kniekehle 80 unmittelbar über der Sitzvorderkante 20, diese ist lediglich im Bereich der Kniekehle 80, die hinter der Schnittebene des Sitzpolsters 24 liegt, stärker nach unten elastisch eingedrückt. Der Rücken 82 des Körpers 78 liegt an einer Rückenlehne 84 an, die Oberschenkel 86 werden auf ihrer Gesamtlänge ideal durch das Sitzkissen 22 abgestützt. Um nun unabhängig von der eingestellten Höhe der Sitzvorderkante die für die Oberschenkel wirksame Abstützung durch das Sitzkissen 22 verändern zu können, anders ausgedrückt, um die Länge des Sitzkissens 22 unabhängig von der individuellen Länge der Oberschenkel eines Passagiers an den in Fig. 2 dargestellten Idealzustand anpassen zu können, eignet sich eine Lehnenverstellung zur Verringerung der Sitzfläche gemäß der DE-A-3 608 828. Gemeinsam mit einer bei praktisch allen Fahrzeugsitzen vorhandenen Längsverstellung und Neigungsverstellung der Rückenlehne ergibt sich mit diesen vier Verstellvorrichtungen eine recht optimale Anpassung eines Fahrzeugsitzes an die anatomischen Gegebenheiten.

## Patentansprüche

1. Fahrzeugsitz, mit einem durch Höhenverstellung der Sitzvorderkante (20) neigungsverstellbaren Sitzkissen (22), das aus einem rahmenförmigen Sitzträger (28), einer Kissenfederung (26) und einem Sitzpolster (24) zusammengesetzt ist, wobei der Sitzträger aus einem Tragteil (30) und einer U-förmigen Schwenkbrücke (32) aufgebaut ist, die
- (a) eine parallel zur Vorderkante des Sitzträgers (28) verlaufende Basis (34) und
- (b) zwei seitliche, am Tragteil (30) angelenkte und um eine parallel zur Basis (34) verlaufende Schwenkachse (40) schwenkbare Schenkel (36, 38) aufweist,
und zwischen Tragteil (30) und Schwenkbrücke (32) eine Verstellvorrichtung (59) für die Neigungsverstellung der Schwenkbrücke (32) gegenüber dem Tragteil (30) vorgesehen ist, dadurch gekennzeichnet, daß die Basis (34) die Vorderkante des Sitzträgers (28) bildet, und daß die Kissenfederung zwischen einem hinteren Rahmenteil (Hinterwand 46) und der Basis (34) gespannt ist und oberhalb der Schwenkachse (40) verläuft.

2. Fahrzeugsitz nach Anspruch 1, dadurch gekennzeichnet, daß die Schwenkachse (40) in einem Bereich zwischen der Längsmitte der Seitenteile (42) und dem an eine Hinterwand (46) angrenzenden Ende der Seitenteile (42) angeordnet ist und vorzugsweise tief nach unten gegenüber der Oberkante des Tragteils (30) versetzt ist.

3. Fahrzeugsitz nach Anspruch 1 oder 2, dadurch gekennzeichnet, daß die Kissenfederung (46) aus flachen, gewellten Einzelfedern besteht.

4. Fahrzeugsitz nach Anspruch 3, dadurch gekennzeichnet, daß die elastische Kissenfederung (26) auch bei einer Belastung durch das Gewicht eines Passagiers oberhalb der Schwenkachse (40) verläuft.

5. Fahrzeugsitz nach Anspruch 4, dadurch gekennzeichnet, daß die örtliche Lage der Schwenkachse (40), die Gesamtzugkraft der Kissenfederung (26) und der Abstand der Kissenfederung (26) von der Schwenkachse (40) so abgestimmt sind, daß der auf die Schwenkbrücke (32) entfallende Anteil eines Passagiergewichts zu einem die Schwenkbrücke (32) nach unten drückenden Drehmoment führt, das zu einem gewissen Teil und vorzugsweise weitgehend durch ein aufrichtendes Moment kompensiert wird, welches das Produkt aus Gesamtkraft der Kissenfederung (36) mal Abstand der Kissenfederung (26) von der Schwenkachse (40) ist.

6. Fahrzeugsitz nach einem der Ansprüche 1 bis 5, dadurch gekennzeichnet, daß die identisch ausgebildeten Schenkel (36, 38) eine nach oben gerichtete Abwinklung (48) aufweisen und daß die Schwenkbrücke (32) vorzugsweise aus Rohrmaterial gefertigt ist.

7. Fahrzeugsitz nach einem der Ansprüche 1 bis 6, dadurch gekennzeichnet, daß das Sitzpolster (24) Vorsprünge (74, 76) aufweist, die auch bei einer Relativbewegung zwischen Sitzpolster (24) und Tragteil (30) sich in unmittelbarer Nähe des Tragteils (30) befinden und dies weitgehend abdecken.

8. Fahrzeugsitz nach einem der Ansprüche 1 bis 7, dadurch gekennzeichnet, daß die Verstelleinrichtung zwischen der Abwinklung (48) und dem Übergang der Schenkel (36, 38) in die Basis (34) angeordnet ist und vorzugsweise ein Verzahnungsteil (50) aufweist, das von mindestens einem Schenkel (36, 38) nach unten vorspringt und einen zentrisch zur Schwenkachse (40) verlaufenden Zahnbogen (52) aufweist, und daß im Tragteil (30) ein mit dem Zahnbogen (52) kämmendes Ritzel (54) drehbar angeordnet ist.

## Claims

1. Vehicle seat with a seat cushion (22) tilt adjustable by height adjustment of the seat front edge (20), comprising a frame-shaped seat base (28), a cushion spring system (26) and the seat upholstery (24); wherein the seat base consists of a base component (30) and a U-shaped swivelling bridge (32) which has - (a) one support section (34) running parallel to the front edge of the seat base (28) and - (b) two side arms (36, 38) with pivoting mountings on the base component (30) so that they can be swivelled around a swivel axis (40) running parallel to the supporting section (34); and wherein provision is made for an adjustment device (59) for the tilt adjustment of the swivelling bridge (32) in relation to the base component (30); characterised by the fact that the supporting section (30) comprises the front edge of the seat base (28), and that the cushion spring system is stretched between one rear frame section (rear wall 46) and the supporting section (34), running above the swivel axis (40).

2. Vehicle seat as claimed in Claim 1, characterised by the fact that the swivel axis (40) is located in a zone between the longitudinal centre of the side sections (42) and is preferably offset deep down in relation to the upper edge of the base component (30).

3. Vehicle seat as claimed in Claims 1 or 2, characterised by the fact that the cushion spring system (26) consists of flat, corrugated individual springs.

4. Vehicle seat as claimed in Claim 3, characterised by the fact that the elastic cushion spring system (26) continues to run above the swivel axis (40) even when subjected to the weight of a passenger.

5. Vehicle seat as claimed in Claim 4, characterised by the fact that the spatial position of the swivel axis (40), the overall tension of the cushion spring and the distance of the cushion spring system (26) from the swivel axis (40) are coordinated with one another in such a way that the portion of a passenger's weight resting on the swivelling bridge (32) results in a torque tending to press the swivelling bridge (32) downwards, and that said torque is to a certain extent and preferably to a large extent compensated by a raising moment which is the product of the total force of the cushion spring system (36) multiplied by the distance of the cushion spring system (26) from the swivel axis.

6. Vehicle seat as claimed in any of the Claims 1 through 5, characterised by the fact that the identically-formed arms (36, 38) have an upward-facing bend (48) and that the swivelling bridge (32) is preferably made of tube material.

7. Vehicle seat as claimed in any of the Claims 1 through 6, characterised by the fact that the seat upholstery (24) features projections (74, 76) which are located in the direct vicinity of the base component (30) and cover the same, even in the event of relative movement between the seat upholstery (24) and the base component (30).

8. Vehicle seat as claimed in any of the Claims 1 through 7, characterised by the fact that the adjustment device is located between the bend (48) and the transition between the arms (36, 38) and the supporting section (34), and that said adjustment device preferably features a toothed component (50) projecting downwards from at least one arm (36, 38) and a toothed arch (52) centred around the swivel axis (40), and that a rotatable pinion (54) engaging in the toothed arch (52) is located in the base section (30).

## Revendications

1. Siège de véhicule ayant un coussin de siège (22) à inclinaison ajustable par réglage en hauteur de l'arête avant (2), composé d'un châssis de siège (28) en forme de cadre, d'une suspension (26) et d'un rembourrage de siège, le châssis étant conçu d'une pièce de support (3) et d'un pont pivotant en forme de U (32), présentant:
- (a) une base (34) disposée parallèlement par rapport au bord avant du châssis du siège (28) et
- (b) deux côtés pivotants (36, 38) latéraux articulés à la pièce de support (30) et disposés autour d'une axe pivotante parallèle à la base (34), et entre la pièce de support (3) et le pont pivotant (32) est prévu un dispositif de réglage (59) pour permettre le réglage d'inclinaison du pont pivotant (32) par rapport à la pièce de support (30), caractérisé en ce que la base (34) forme l'arête avant du châssis de siège (28) et que la suspension est tendue entre la partie arrière du cadre (paroi arrière (46) et la base (34) et passe au-dessus de l'axe pivotant (40).

2. Siège de véhicule selon la revendication 1, caractérisé en ce que l'axe pivotant (40) est disposé entre le milieu longitudinal de la partie latérale (42) et le bout des parties latérales (42) qui touche à la paroi arrière et décalé de préférence profondément vers le bas par rapport au bord supérieur de la pièce de support (30).

3. Siège de véhicule selon la revendication 1 ou 2, caractérisé en ce que la suspension de coussin (46) est composée de ressorts individuels plats et ondulés.

4. Siège de véhicule selon la revendication 3, caractérisé en ce que la suspension élastique des coussins (26) se maintient au-dessus de l'axe pivotant (40) même sous le poids d'un passager.

5. Siège de véhicule selon la revendication 4, caractérisée en ce que l'emplacement de l'axe pivotant (40) la force totale de traction de la suspension des coussins (26) et l'écart de la suspension (26) par rapport à l'axe pivotant (40) sont conçus de façon que la part de poids d'un passager exercée sur le pont pivotant (32) provoque un couple de rotation qui pousse le pont pivotant (32) vers le bas, couple compensé en grande partie et prioritairement par un couple de redressement, produit de la force totale de la suspension (36) multipliée par l'écart de la suspension (26) par rapport à l'axe pivotant (40).

6. Siège de véhicule selon l'une des revendications 1 à 5, caractérisé en ce que les branches (36, 38) de conception identique présentent un coude orienté vers le haut et que le pont pivotant (32) est fabriqué de préférence en matériau brut.

7. Siège de véhicule selon l'une des revendications 1 à 6, caractérisé en ce que le rembourrage de siège (24) présente des avances (74, 76) qui se trouvent à proximité immédiate du support (30) même en cas de mouvement relatif entre le rembourrage de siège (24) et le support (30).

8. Siège de véhicule selon l'une des revendications 1 à 7, caractérisé en ce que le dispositif de réglage est disposé entre le coude (48) et la transition des branches (36, 38) dans la base (34) et présente de préférence une pièce dentée (50) ressortant au moins d'une branche (36, 38) vers le bas et présente un arc denté en position centrique par rapport à l'axe pivotant (40) et portant dans le support (30) un pignon (54) qui s'engrenne dans l'arc denté (52)
